# EUROPEAN PATENT APPLICATION

(11) **EP 2 790 098 A1**
(43) Date of publication of application: **15.10.2014**
(21) Application number: 14163468.3
(22) Date of filing: 03.04.2014
(51) Int. Cl.: G06F 3/12, G03G 15/00

(54) **Image forming apparatus, image forming system and method for controlling image forming apparatus**

(30) Priority: 12.04.2013 JP 2013083752
(71) Applicant: Konica Minolta, Inc., Tokyo 100-7015 (JP)
(72) Inventor: Asakawa, Minoru, Tokyo, Tokyo 100-7015 (JP)
(74) Representative: Stanners, David Ralph

(57) **Abstract**

An image forming system, including: an image forming apparatus which forms an image on a sheet; and a post-processing apparatus which performs post-processing on the sheet, wherein the image forming apparatus executes a job reservation function that is storing a new job so as to output the new job after outputting a predetermined job in a case where the new job is input during output of the predetermined job, and the image forming apparatus includes: a determination section which, when the stored new job is to be output, determines whether the new job includes post-processing to be performed by a specific predetermined post-processing apparatus; and a control section which restricts output of the new job in a case where the determination section determines that the new job includes the post-processing to be performed by the specific post-processing apparatus.

## Description

### BACKGROUND OF THE INVENTION

### 1. Field of the Invention

The present invention relates to an image forming apparatus to which a post-processing apparatus can be connected, an image forming system in which the post-processing apparatus is connected to the image forming apparatus and a method for controlling the image forming apparatus.

### 2. Description of Related Art

Conventionally, post-processing such as stapling and saddle stitching can be performed in series on sheets of paper on which images were formed by connecting a post-processing apparatus to an image forming apparatus.

As for an image forming system which includes an image forming apparatus and a post-processing apparatus in such way, various techniques have been proposed in order to improve user's workability.

For example, Japanese Patent Application Laid Open Publication No. 2007-219495 discloses a technique which prevents troubles by prohibiting a job from being executed in a case where a sheet is removed after executing a previous job in a sheet processing apparatus, the job being a job which is to be executed after the previous job and requires the sheet to be removed from the sheet processing apparatus.

On the other hand, there have been conventionally known image forming apparatuses which have a job reservation function that is specifying, in advance, information regarding a job to be output following a previous job while outputting the previous job and capable of starting execution of the following job immediately when the output of the previous job is completed.

When the job reservation function is executed in the image forming system in which the post-processing apparatus is connected to the image forming apparatus having the job reservation function, the following problems occur in some cases.

For example, though various types of post-processing apparatuses can be connected to the image forming apparatus, information which can be sent and received therebetween is limited depending on the type of the post-processing apparatus. As an example, the information which can be sent and received is limited when the image forming apparatus and the post-processing apparatus have different manufacturers. In such case, since the exchange of information between the image forming apparatus and the post-processing apparatus is limited, post-processing needs to be individually set at the post-processing apparatus for executing a job in which the post-processing is to be performed.

In a case where the job reservation function is executed in the above image forming system, output of a reserved job is started immediately when output of the previous job is completed. Thus, when post-processing is to be performed by the post-processing apparatus in the reserved job, the user misses the timing to provide settings for the post-processing with respect to the reserved job at the post-processing apparatus, and the post-processing apparatus performs, in the reserved job, post-processing on a sheet on which images are formed while maintaining the settings for post-processing with respect to the previous job. As a result, desired post-processing with respect to the reserved job is not performed and the reserved job needs to be output again in some cases.

Also, there are known post-processing apparatuses capable of measuring thickness, size and such like of a product obtained by performing post-processing by themselves and inputting the measurement result when executing the subsequent job to reflect the measurement result in the operation thereof. In an image forming system which includes such post-processing apparatus, when the job reservation function is executed, the reserved job is executed before the measurement result regarding the product obtained by the previous job is input in some cases. In such case, the result of the previous job is not reflected in the post-processing with respect to the reserved job and a desired product with respect to the reserved job cannot be obtained.

### SUMMARY OF THE INVENTION

The present invention was made in consideration of the above problems, and an object of the present invention is to provide an image forming apparatus, an image forming system and a method for controlling the image forming apparatus which can surely obtain a desired output product.

In order to achieve the above object, according to the first aspect of the present invention, there is provided an image forming system, including: an image forming apparatus which forms an image on a sheet; and a post-processing apparatus which performs post-processing on the sheet on which the image is formed by the image forming apparatus, wherein the image forming apparatus executes a job reservation function that is storing a new job so as to output the new job after outputting a predetermined job in a case where the new job is input during output of the predetermined job, and the image forming apparatus includes: a determination section which, when the stored new job is to be output, determines whether the new job includes post-processing to be performed by a specific predetermined post-processing apparatus; and a control section which restricts output of the new job in a case where the determination section determines that the new job includes the post-processing to be performed by the specific post-processing apparatus.

According to the first aspect of the present invention, when the reserved new job is to be executed, in a case where the post-processing by the specific post-processing apparatus is performed in the new job, the output of the new job is restricted, and thus, it is possible to prevent the new job from being executed without performing setting regarding the post-processing and a desired output product can be obtained. Preferably, the image forming system further includes a storage section in which data regarding the specific predetermined post-processing apparatus is stored.

Preferably, the image forming system further includes an input section at which data regarding the specific predetermined post-processing apparatus is input.

Preferably, in the image forming system, the specific post-processing apparatus communicates with the image forming apparatus only by parallel communication.

Preferably, in the image forming system, in the case where the determination section determines that the new job includes the post-processing to be performed by the specific post-processing apparatus, the control section compares information regarding the new job with information regarding the predetermined job, and when a specific predetermined condition of the new job matches that of the predetermined job, the control section releases restriction on the output of the new job.

Preferably, in the image forming system, the specific condition is set by a type of the post-processing apparatus.

Preferably, in the image forming system, in the case where the determination section determines that the new job includes the post-processing to be performed by the specific post-processing apparatus, when trial output is set in the new job, the control section releases restriction on the output of the new job.

Preferably, in the image forming system, when the trial output is set in the new job, the control section performs control so as to change an output condition of the new job and output the new job.

According to the second aspect of the present invention, there is provided an image forming apparatus which is connectable to a post-processing apparatus that performs post-processing on a sheet on which an image is formed, including: a determination section which, when a stored new job is to be output, determines whether the new job includes post-processing to be performed by a specific predetermined post-processing apparatus; and a control section which restricts output of the new job in a case where the determination section determines that the new job includes the post-processing to be performed by the specific post-processing apparatus, wherein the image forming apparatus executes a job reservation function that is storing the new job so as to output the new job after outputting a predetermined job in a case where the new job is input during output of the predetermined job.

According to the second aspect of the present invention, when the reserved new job is to be executed, in a case where the post-processing by the specific post-processing apparatus is performed in the new job, the output of the new job is restricted, and thus, it is possible to prevent the new job from being executed without performing setting regarding the post-processing and a desired output product can be obtained.

Preferably, the image forming apparatus further includes a storage section in which data regarding the specific predetermined post-processing apparatus is stored.

Preferably, the image forming apparatus further includes an input section at which data regarding the specific predetermined post-processing apparatus is input.

Preferably, in the image forming apparatus, the specific post-processing apparatus communicates with the image forming apparatus only by parallel communication.

Preferably, in the image forming apparatus, in the case where the determination section determines that the new job includes the post-processing to be performed by the specific post-processing apparatus, the control section compares information regarding the new job with information regarding the predetermined job, and when a specific predetermined condition of the new job matches that of the predetermined job, the control section releases restriction on the output of the new job.

Preferably, in the image forming apparatus, the specific condition is set by a type of the post-processing apparatus.

Preferably, in the image forming apparatus, in the case where the determination section determines that the new job includes the post-processing to be performed by the specific post-processing apparatus, when trial output is set in the new job, the control section releases restriction on the output of the new job.

Preferably, in the image forming apparatus, when the trial output is set in the new job, the control section performs control so as to change an output condition of the new job and output the new job.

According to the third aspect of the present invention, there is provided a method for controlling an image forming apparatus which is connectable to a post-processing apparatus that performs post-processing on a sheet on which an image is formed, including: determining, when a stored new job is to be output, whether the new job includes post-processing to be performed by a specific predetermined post-processing apparatus; and controlling so as to restrict output of the new job in a case where the new job is determined to include the post-processing to be performed by the specific post-processing apparatus in the determining, wherein the image forming apparatus executes a job reservation function that is storing the new job so as to output the new job after outputting a predetermined job in a case where the new job is input during output of the predetermined job.

According to the third aspect of the present invention, when the reserved new job is to be executed, in a case where the post-processing by the specific post-processing apparatus is performed in the new job, the output of the new job is restricted, and thus, it is possible to prevent the new job from being executed without performing setting regarding the post-processing and a desired output product can be obtained.

Preferably, in the method for controlling the image forming apparatus, in the case where the new job is determined to include the post-processing to be performed by the specific post-processing apparatus in the determining, information regarding the new job is compared with information regarding the predetermined job, and when a specific predetermined condition of the new job matches that of the predetermined job, restriction on the output of the new job is released in the controlling.

Preferably, in the method for controlling the image forming apparatus, the specific condition is set by a type of the post-processing apparatus.

Preferably, in the method for controlling the image forming apparatus, in the case where the new job is determined to include the post-processing to be performed by the specific post-processing apparatus in the determining, when trial output is set in the new job, restriction on the output of the new job is released in the controlling.

Preferably, in the method for controlling the image forming apparatus, when the trial output is set in the new job, control is performed so as to change an output condition of the new job and output the new job in the controlling.

### BRIEF DESCRIPTION OF THE DRAWINGS

The above and other objects, advantages and features of the present invention will become more fully understood from the detailed description given hereinbelow and the appended drawings which are given by way of illustration only, and thus are not intended as a definition of the limits of the present invention, and wherein:
FIG. 1 is a view showing a configuration of an image forming system in an embodiment;
FIG. 2 is a diagram showing an electrical configuration of the image forming system in the embodiment;
FIG. 3 is a diagram showing reference conditions in the embodiment; and
FIG. 4 is a flow chart showing a control procedure in the embodiment.

### DETAILED DESCRIPTION OF THE PREFERRED EMBODIMENT

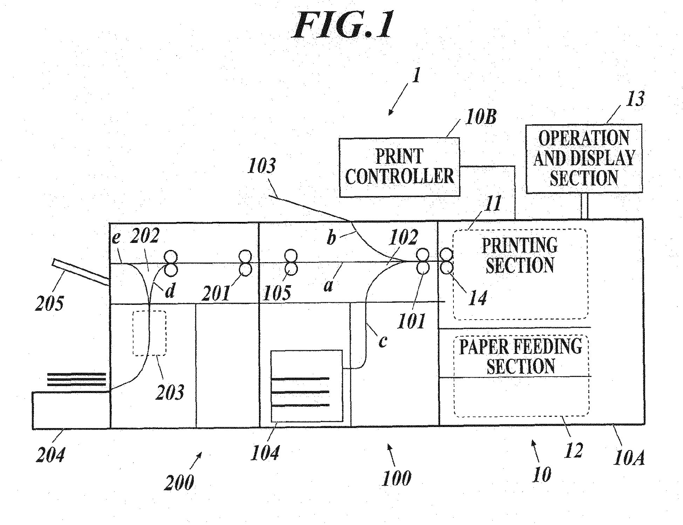

Hereinafter, an embodiment of the present invention will be described with reference to the drawings. FIG. 1 is a view showing an image forming system in the embodiment.

In an image forming system 1, a first post-processing apparatus 100 is connected to an image forming apparatus 10, and further, a second post-processing apparatus 200 is connected to the first post-processing apparatus 100. The image forming apparatus 10 includes a main body 10A and a print controller 10B. The main body 10A includes a printing section 11, a paper feeding section 12 and an operation and display section 13. The printing section 11 includes a well-known configuration for forming images on a sheet by an electrophotographic method, for example. The image forming method is not limited to the electrophotographic method.

The paper feeding section 12 contains a plurality of sheets of paper and feeds the sheets one by one to convey them to the printing section 11.

The operation and display section 13 includes an operation section and a display section. Necessary information is displayed on the display section and user's operation is accepted at the operation section. Though not shown in the drawings, the above information may be displayed on an external terminal which is connected to the image forming apparatus 10 via a network or such like and the user's operation may be accepted through the external terminal.

At the operation and display section 13, jobs to be output are input and reference conditions for determining whether an after-mentioned reserved job can be output subsequently to the previous job continuously are set. Furthermore, proof printing (trial output) can be set for each of the jobs. Settings such as changing the destination to eject the sheet from a usual tray to a tray dedicated for proof output are provided in the job for which proof printing is set, for example. The proof printing is set in such case that a job is output on a certain condition to confirm the outcome.

The main body 10A is connected to the print controller 10B. The print controller 10B controls operations of the main body 10A according to the information input at the operation and display section 13 or the external terminal. The print controller 10B may be connected to the main body 10A as a separate body as shown in the drawing or the function thereof may be incorporated into the main body 10A.

The image formation by the image forming apparatus 10 is performed on the basis of image files, document files or such like which are stored in the image forming apparatus 10 or received from an external apparatus via a network, or the image formation is performed by reading out document images. Though not shown in the drawing, the image forming apparatus 10 may be provided with a reading section which optically reads out images on the document which is a target of the image formation.

The sheet fed by the paper feeding section 12 is conveyed to the printing section 11 and image formation is performed on the basis of printing data. The sheet on which images were formed is ejected from the main body 10A by ejection rollers 14 and sent into the first post-processing apparatus 100.

The first post-processing apparatus 100 in the embodiment includes a function as a large stacker on which sheets after image formation are stacked. The first post-processing apparatus 100 includes carry-in rollers 101, a branch section 102, a sub-tray 103, a large stacker 104, carry-out rollers 105 and such like.

The sheet ejected from the main body 10A in the image forming apparatus 10 is carried into the first post-processing apparatus 100 by the carry-in rollers 101. The carried sheet is guided to one of conveyance paths a, b and c by the branch section 102.

The conveyance path a is a conveyance path extending in the horizontal direction of the drawing from the branch section 102 for conveying the sheet to the second post-processing apparatus 200. The sheet on which post-processing is to be performed by the second post-processing apparatus 200 is conveyed through the conveyance path a by the guide of the branch section 102 and conveyed toward the second post-processing apparatus 200 by the carry-out rollers 105.

The conveyance path b is a conveyance path extending to the upper left of the drawing from the branch section 102 for ejecting the sheet to the sub-tray 103. The sheet to be ejected to the sub-tray 103 is conveyed through the conveyance path b by the guide of the branch section 102.

The conveyance path c is a conveyance path extending to the lower left of the drawing from the branch section 102 for ejecting the sheet to the large stacker 104. The sheet to be ejected to the large stacker 104 is conveyed through the conveyance path c by the guide of the branch section 102.

The second post-processing apparatus 200 in the embodiment is a post-processing apparatus having a function that is performing saddle stitching on a plurality of sheets. The second post-processing apparatus 200 includes carry-in rollers 201, a branch section 202, a saddle stitching section 203, a stacker 204, an ejection tray 205 and such like.

The sheet ejected from the first post-processing apparatus 100 is carried into the second post-processing apparatus 200 by the carry-in rollers 201. The carried sheet is guided to one of the conveyance paths d and e by the branch section 202.

The conveyance path d is a conveyance path extending to the lower left of the drawing from the branch section 202, and conveys the sheet to the saddle stitching section 203 and further conveys the saddle-stitched sheet to the stacker 204. Though the detailed description regarding the configuration of the saddle stitching section 203 is omitted, at the saddle stitching section 203, stapling is performed at predetermined positions in a central portion of the conveyed sheet bundle and the sheet bundle is folded in half at the central portion. The saddle-stitched sheet bundle is ejected to the stacker 204.

The conveyance path e is a conveyance path extending in the horizontal direction of the drawing from the branch section 202 for ejecting the sheet to the ejection tray 205.

The first post-processing apparatus 100 and the second post-processing apparatus 200 may have a function different from the functions described above.

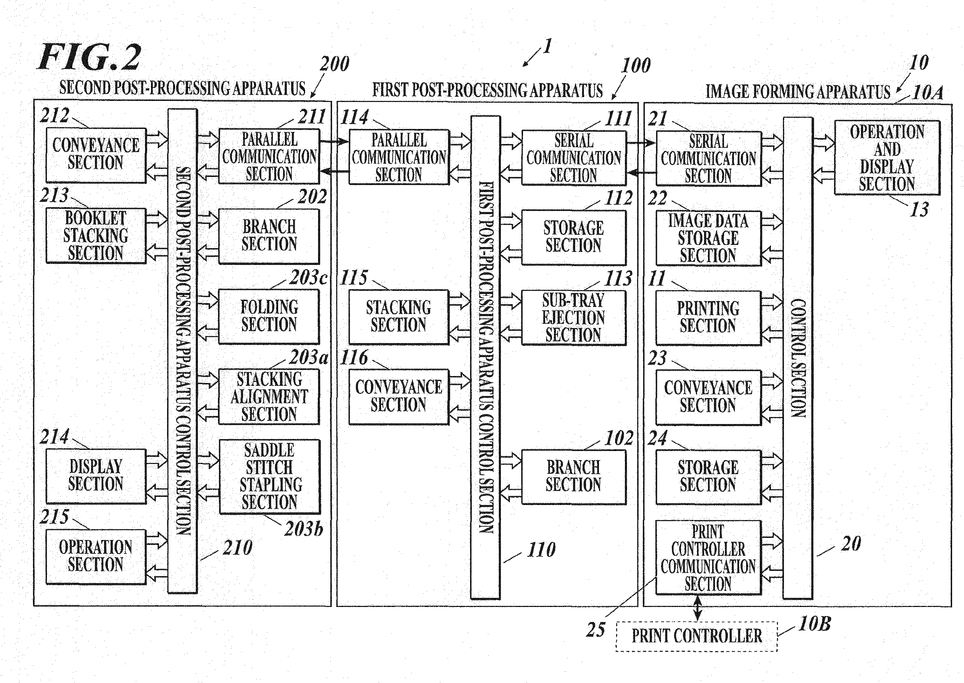

FIG. 2 is a block diagram showing an electrical configuration of the image forming system 1 in the embodiment. Same reference numerals as FIG. 1 are provided to the configurations which have been described in FIG. 1, and detailed description thereof is omitted.

The main body 10A in the image forming apparatus 10 includes the printing section 11, the operation and display section 13, a control section 20, a serial communication section 21, an image data storage section 22, a conveyance section 23, a storage section 24, a print controller communication section 25 and such like.

The control section 20 receives various types of signals from the sections and issues instructions so as to control the operations of the sections in the main body 10A.

The serial communication section 21 sends and receives information to and from the first post-processing apparatus 100 by serial communication. In the embodiment, the first post-processing apparatus 100 is a post-processing apparatus capable of serial communication with the image forming apparatus 10.

The image forming apparatus 10 sends and receives various information to and from the first post-processing apparatus 100 via the serial communication section 21. The information mainly includes the type of the first post-processing apparatus 100, paper ejection information from the ejection rollers 14, error notification information, status of the first post-processing apparatus 100 and such like.

As for the type of post-processing apparatus, a user may input the name and model number of the post-processing apparatus at the operation and display section 13 in the image forming apparatus 10, for example.

In a case where the first post-processing apparatus 100 performs post-processing on a sheet, setting information and such like regarding the post-processing to be performed by the first post-processing apparatus 100 is also sent to the first post-processing apparatus 100. The setting information includes a sheet size, sheet type, weight, post-processing parameter and such like. When a job is input in the image forming apparatus 10, the setting information included in the job is sent to the first post-processing apparatus 100 via the serial communication section 21, and thereby, the first post-processing apparatus 100 controls operations of the sections therein on the basis of the received setting information and performs the desired post-processing on the sheet.

The image data storage section 22 includes a hard disk drive (HDD), for example, and various data such as image data and document data which can be a target of the image formation is stored in the image data storage section 22.

The conveyance section 23 conveys the sheet fed by the paper feeding section 12 to the printing section 11 from the paper feeding section 12 and further conveys the sheet from the printing section 11 to the first post-processing section 100.

The storage section 24 is for storing information regarding the job for which execution is instructed and after-mentioned reference conditions. The information regarding the job is the sheet size, sheet type, the number of sheets forming a bundle, the type of post-processing and a parameter regarding post-processing, for example. The storage section 24 can be configured to be divided into areas by post-processing apparatuses connected to the image forming apparatus 10 so that the information regarding the job is stored therein.

In addition, in the storage section 24, a post-processing apparatus which possibly does not obtain a desired result when executing post-processing with respect to the reserved job can be registered. This post-processing apparatus is called a specific post-processing apparatus.

The specific post-processing apparatus is a post-processing apparatus which is limited in exchanging information with the image forming apparatus or a post-processing apparatus that is connected thereto, for example. A post-processing apparatus which is manufactured by a manufacturer different from that of an image forming apparatus or a post-processing apparatus connected thereto can be the specific post-processing apparatus.

Also, a post-processing apparatus which can measure the thickness, size and such like of the product obtained by performing the post-processing by itself and input the measurement result when executing subsequent job to reflect the measurement result in the operation thereof may be registered. One of such post-processing apparatuses is a post-processing apparatus which automatically measures the thickness and size of the product by a sensor or such like and controls the operation thereof so that the post-processing is appropriately performed on the basis of the measurement result.

The specific post-processing apparatus is not limited to the post-processing apparatus which automatically measures the thickness and size of the product. For example, the post-processing operation of the post-processing apparatus with respect to the subsequent job can be controlled by the user manually measuring the thickness and size of the product obtained by the previous job and inputting the measurement result to the post-processing apparatus. In such case, the above problems can also occur due to the job reservation function being executed.

Accordingly, any post-processing apparatus can be registered as the specific post-processing apparatus as long as it is capable of adjusting the post-processing operation conditions.

As for the method for registering the specific post-processing apparatus, the user inputs information regarding the post-processing apparatus to be registered at the operation and display section 13 in the image forming apparatus 10 and the input post-processing apparatus is stored in the storage section 24 as the specific post-processing apparatus. For example, the model number of the post-processing apparatus is input, the input number is compared with the information regarding the post-processing apparatus which is stored in advance, data of post-processing apparatus whose model number is identical with the input model number is read out, and the read data is stored as the specific post-processing apparatus information in the storage section 24.

Alternatively, the image forming apparatus may receive the apparatus information from the post-processing apparatus connected thereto, display the received data on the operation and display section 13 and make the user select whether to register the post-processing apparatus as the specific post-processing apparatus.

Furthermore, the specific post-processing apparatus information may be stored in the storage section 24 in advance before shipment or such like.

The print controller communication section 25 sends and receives information to and from the print controller 10B.

The first post-processing apparatus 100 includes the branch section 102, a first post-processing apparatus control section 110, a serial communication section 111, a storage section 112, a sub-tray ejection section 113, a parallel communication section 114, a stacking section 115 and a conveyance section 116.

The first post-processing apparatus control section 110 receives signals from the sections and controls operations of the sections in the first post-processing apparatus 100.

The serial communication section 111 sends and receives information to and from the image forming apparatus 10 by serial communication.

Various information is stored in the storage section 112. For example, a table showing movement amounts of the sections in the post-processing apparatus associated with the information such as sheet size sent from the image forming apparatus 10 is stored.

The sub-tray ejection section 113 ejects the sheet which was assigned and conveyed to the conveyance path b by the branch section 102 to the sub-tray 103.

The parallel communication section 114 sends and receives information to and from the second post-processing apparatus 200 by parallel communication. In the embodiment, the second post-processing apparatus 200 cannot perform serial communication with the first post-processing apparatus 100 since the manufacturer thereof is different from that of the image forming apparatus 10 and the first post-processing apparatus 100, for example.

In the serial communication, a large volume signal can be sent and received, and thus information regarding a job and information such as the parameter of post-processing can be sent and received when the job is executed. On the other hand, in the parallel communication, only the limited information can be sent and received. The information which can be sent and received by the parallel communication mainly includes essential information for executing post-processing such as the type of post-processing apparatus, an operation start command, a paper ejection signal of a sheet, the type of post-processing and error notification information.

The stacking section 115 stacks the sheet which was assigned and conveyed to the conveyance path c by the branch section 102 on the large stacker 104.

The conveyance section 116 conveys the sheet inside the first post-processing apparatus 100.

The second post-processing apparatus 200 includes a branch section 202, a second post-processing apparatus control section 210, a parallel communication section 211, a stacking alignment section 203a, a saddle stitch stapling section 203b, a folding section 203c, a conveyance section 212, a booklet stacking section 213, a display section 214, an operation section 215 and such like.

The second post-processing apparatus control section 210 receives signals from the sections and controls the operations of the sections inside the second post-processing apparatus 200.

The parallel communication section 211 sends and receives information to and from the first post-processing apparatus 100 by the parallel communication. By the parallel communication, the type of the second post-processing apparatus 200 is sent to the first post-processing apparatus 100 and finally sent to the image forming apparatus 10.

In such way, even in an image forming system in which a plurality of post-processing apparatuses are connected to each other, information specifying all the post-processing apparatuses is sent to the image forming apparatus 10. That is, the control section 20 in the image forming apparatus 10 can identify all the connected post-processing apparatuses.

The stacking alignment section 203a aligns the sheets stacked in the stacking section (not shown in the drawings) in the saddle stitching section 203.

The saddle stitch stapling section 203b performs stapling on the central portion of the sheet bundle aligned by the stacking alignment section 203a.

The folding section 203c folds the sheet bundle on which stapling was performed by the saddle stitch stapling section 203b. Specifically, a booklet is completed by folding the sheet bundle along the positions at which the stapling was performed.

The conveyance section 212 conveys a sheet or sheet bundle inside the second post-processing apparatus 200.

The booklet stacking section 213 stacks the sheet bundle on which saddle stitching was performed by the saddle stitching section 203 on the stacker 204.

The display section 214 displays information regarding post-processing to be performed in the second post-processing apparatus 200.

The operation section 215 includes various types of keys and accepts operations from a user. The second post-processing apparatus control section 210 can reflect and display the result of the operation at the operation section 215 on the display section 214.

In the embodiment, the second post-processing apparatus 200 is stored as the specific post-processing apparatus in the storage section 24.

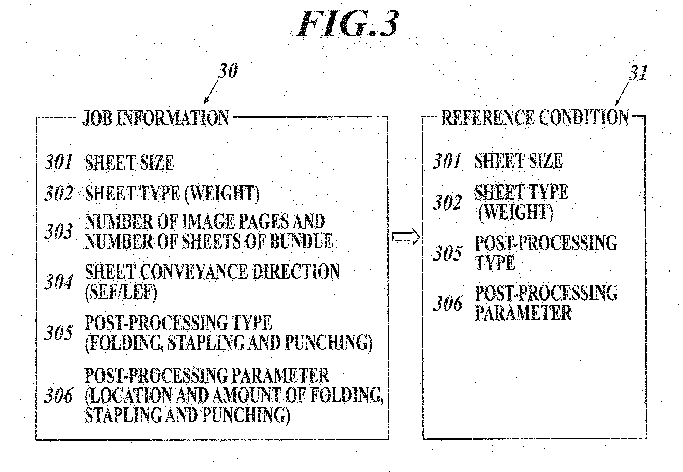

FIG. 3 is a diagram showing conditions which can be set at the operation and display section 13 in the image forming apparatus 10, the conditions being references for determining whether to output the reserved job subsequently to the previous job continuously. The job data received by the image forming apparatus 10 includes job information 30.

The job information 30 includes a plurality of pieces of information such as sheet size 301, sheet weight 302, the number of sheets in a bundle (number of pages) 303, sheet conveyance direction 304, post-processing type 305 and post-processing parameter 306, for example.

At the operation and display section 13, some pieces in the job information 30 can be set as reference conditions when determining whether to output the reserved job subsequently to the previous job continuously. The setting is made by displaying the job information 30, displaying a request to a user for selecting reference conditions, receiving an input to select conditions and setting the conditions as reference conditions 31.

FIG. 3 shows an example in which the sheet size 301, sheet weight 302, post-processing type 305 and post-processing parameter 306 are set as reference conditions 31.

In a case where a plurality of post-processing apparatuses are connected to each other, the reference conditions 31 can be set for each of the post processing apparatuses and the set reference conditions 31 can be classified by the post-processing apparatuses to be stored in the storage section 24.

The reference conditions 31 may be set as an initial setting in advance and can be changed any time while the image forming apparatus 10 is turned on. Alternatively, the reference conditions 31 may be settable each time when a job is executed.

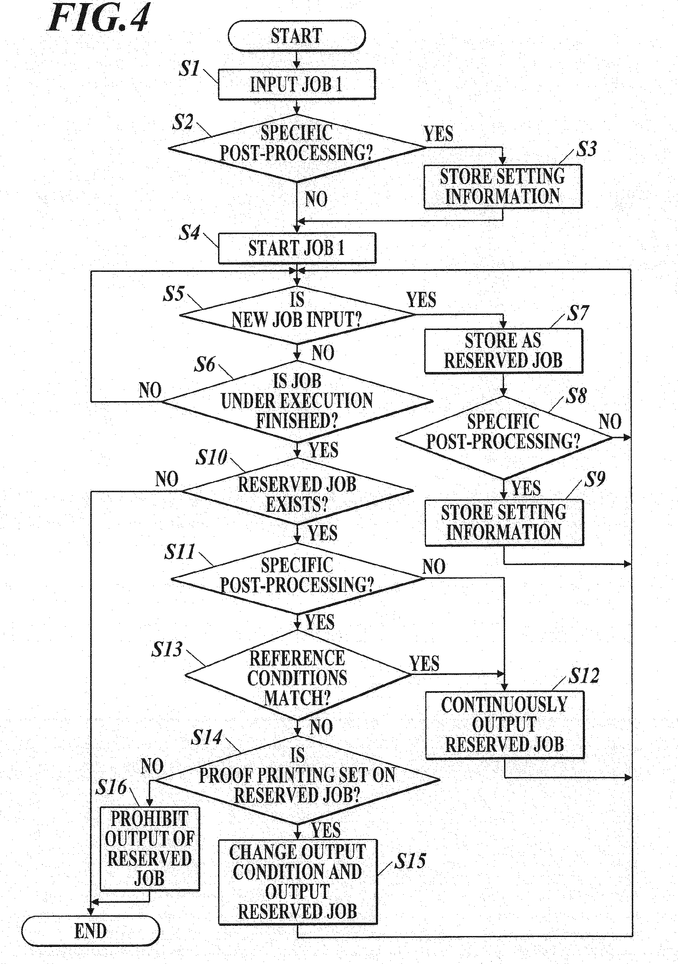

Next, the control procedure when executing a job in the image forming apparatus 10 will be described with reference to FIG. 4. The control procedure shown in FIG. 4 is executed by the control section 20 in the image forming apparatus 10. The control section 20 loads a program which is stored in a ROM or such like (not shown in the drawings) inside the image forming apparatus 10 into a RAM or such like (not shown in the drawings) and executes the control.

When outputting a job, in a case where post-processing by the second post-processing apparatus 200 is performed in the job, the user inputs, in advance, conditions of the post-processing at the operation section 215 in the second post-processing apparatus 200. Thereby, the post-processing is executed in the desired conditions on the sheet on which images were formed by the image forming apparatus 10 even when a post-processing apparatus such as the second post-processing apparatus which can perform only parallel communication with the image forming apparatus 10 is used in the job.

When data regarding a job (referred to as job 1) to be output is input from the print controller 10B, a document reading unit (not shown in the drawings) or an external terminal (not shown in the drawings) connected to the image forming apparatus 10 (step S1), whether the post-processing by the specific post-processing apparatus (second post-processing apparatus 200) is to be performed in the job is determined (step S2). The determination is made according to whether the input job data includes information indicating that the specific post-processing apparatus performs post-processing.

If the post-processing is to be performed by the specific post-processing apparatus in the input job (step S2: YES), the information regarding the job (job 1) is stored in the storage section 24 (step S3), and the output of the job 1 is started (step S4). In a case where a plurality of types of specific post-processing apparatuses are connected to each other, information regarding the job 1 is separately stored for each type of the post-processing apparatuses in step S3. On the other hand, if the specific post-processing apparatus does not perform post-processing in the job (step S2: NO), the processing directly proceeds to step S4 and the output of the job 1 is started.

Then, whether data regarding a job (job 2) is newly input is determined (step S5). If it is determined that the data is not input (step S5: NO), whether the output of the job (job 1) under execution is completed is determined (step S6). When the output of the job 1 is not completed (step S6: NO), the processing returns to step S5.

In step S5, if it is determined that the data regarding the new job is input (step S5: YES), the input data regarding the job (job 2) is stored as a reserved job (step S7). The input data may be stored in the storage section 24 and in another memory or such like for storing the reserved job. Whether post-processing is to be performed by the specific post-processing apparatus (second post-processing apparatus 200) in the stored job 2 is determined (step S8). If the post-processing is not performed by the specific post-processing apparatus in the job 2 (step S8: NO), the processing returns to step S5. On the other hand, if the post-processing is to be performed by the specific post-processing apparatus in the job 2 (step S8: YES), the setting information regarding the job 2 is stored in the storage section 24 (step S9) and the processing returns to step S5.

In step S6, if it is determined that the output of job 1 is completed (step S6: YES), whether the reserved job is stored is determined (step S10). If it is determined that the reserved job is not stored (step S10: NO), the processing ends.

On the other hand, if it is determined that the reserved job is stored (step S10: YES), the control section 20 determines whether the post-processing is to be performed by the specific post-processing apparatus in the reserved job (job 2) (step S11). This determination is made on the basis of the job information stored in the storage section 24. If the post-processing is not to be performed by the specific post-processing apparatus in the job 2 (step S11: NO), the job 2 is output subsequently to the job 1 continuously (step S12). Then, the processing returns to step S5, and whether a job (job 3) is newly input is determined. If the job (job 3) is not input, whether the output of the job (job 2) under execution is completed is determined (step S6). If the output of the job is completed, the processing ends. If the job (job 3) is newly input during the output of the job (job 2) (step S5: YES), the input job is stored as a reserved job (step S7), and thereafter the above control is repeatedly performed.

In step S11, if the post-processing is to be performed by the specific post-processing apparatus in the job 2 which is the reserved job (step S11: YES), the reference conditions of the job 2 are compared with those of the job 1 and whether the reference conditions of the job 2 match those of the job 1 is determined (step S13). This determination is made by referring to the information regarding the job 1 stored in step S3 and the information regarding the reserved job stored in step S7 and comparing them. Here, though the reference conditions may be set as an initial setting in advance, the reference conditions may also be settable at the operation and display section 13 for each of the jobs, for example.

If the reference conditions of the job 2 match the reference conditions of the job 1 (step S13: YES), the processing proceeds to step S12, and the job 2 is output subsequently to the job 1 continuously. Since the setting on the post-processing apparatus need not be changed when the reference conditions of a reserved job match those of the previous job, in a case where a job is reserved, productivity can be maintained by performing control so as to output the reserved job subsequently to the previous job continuously.

On the other hand, if the reference conditions of the job 2 are different from those of the job 1 (step S13: NO), whether the proof printing (trial output) is set on the job 2 is determined (step S14). If the proof printing is set (step S14: YES), the output conditions of the job 2 are changed so as to output the job 2 subsequently to the job 1 continuously (step S15). Here, the change in the output conditions is the change in the destination to eject the output product, for example. In a case where the proof printing is set, since the output is merely trial output, the continuous output does not need to be prohibited and the output is performed without changing the settings in the post-processing apparatus.

In such case, the job 2 is output following the job 1. To be specific, the sheet on which images were formed in the image forming apparatus 10 is conveyed to the first post-processing apparatus 100, conveyed through the conveyance path a and directed to the second post-processing apparatus 200. Then, in the second post-processing apparatus 200, the saddle stitching is performed in the same settings as the job 1, and the sheet bundle is ejected to the ejection tray 205, for example.

When the output of the reserved job (job 2) is executed, the processing returns to step S5, whether a new job is further input is determined, and the above control is repeated.

On the other hand, in step S 14, if it is determined that the proof printing is not set on the job 2 (step S14: NO), setting is performed so as not to output the job 2 following the job 1 (step S16), and the processing ends. At that time, an alarm indicating that the post-processing is to be performed by the specific post-processing apparatus in the reserved job may be displayed on the operation and display section 13 in the image forming apparatus 10, for example.

According to the control shown in FIG. 4, when a subsequent job is input during execution of a predetermined job, in a case where post-processing is performed by a specific post-processing apparatus in the new job, the subsequent output of the new job (reserved job) is limited. Accordingly, it is possible to prevent the new job from being executed without performing setting regarding the post-processing, and a desired output product is output. Thus, it is possible to resolve the problem that the desired output product cannot be obtained.

By registering, as a specific post-processing apparatus, a post-processing apparatus which is capable of only parallel communication with the image forming apparatus 10 or a post-processing apparatus connected to the image forming apparatus 10, the user can perform post-processing setting which cannot be communicated by the parallel communication in the post-processing apparatus before executing the reserved job, and as a result, the user can obtain the desired output product with respect to the reserved job.

According to the control shown in FIG. 4, in a case where the post-processing is to be performed by the specific post-processing apparatus in the reserved job, when reference conditions of the reserved job match those of the previous job, the reserved job is output subsequently to the previous job continuously. By setting appropriate reference conditions as described by using FIG. 3, the reserved job is output subsequently to the previous job continuously when it is not necessary to perform particular setting with respect to the specific post-processing apparatus between the previous job and the reserved job, and thus it is possible to improve productivity in outputting a plurality of jobs while resolving the above problems.

Furthermore, according to the control shown in FIG. 4, even when the reference conditions of the reserved job do not match the reference conditions of the previous job, if the proof printing is set on the reserved job, the output is continued by changing the output conditions of the reserved job. Since the output is merely trial output when the proof printing is set, the continuous output does not need to be prohibited and thus the above control is performed to improve productivity in outputting the plurality of jobs.

Though the control procedure by the control section 20 in the embodiment has been described above, the steps S13 to S15 shown in FIG. 4 does not necessarily need to be provided. For example, if the post-processing is to be performed by the specific post-processing apparatus in the reserved job in step S11, the control procedure may be such that the processing proceeds to step S16 in FIG. 4 at that time to prohibit the reserved job being output subsequently to the previous job continuously. Also, step S13 may be included and steps S14 and S15 may not be included in the control procedure.

In the control procedure shown in FIG. 4, a post-processing apparatus such as the second post-processing apparatus 200 capable of communicating with the image forming apparatus 10 and the first post-processing apparatus 100 only by parallel communication is registered as the specific post-processing apparatus as an example; however, a post-processing apparatus which can reflect the output result of the previous job in the subsequent job may be registered as the specific post-processing apparatus as described above. In such case, by executing the same control as FIG. 4, the desired post-processing product can also be surely obtained with respect to the reserved job.

In the embodiment, output of a reserved job is prohibited in a case where post-processing is to be performed by the specific post-processing apparatus in the reserved job. However, image formation in the reserved job may be executed as much as possible and the first sheet may stand by before the entrance point to the specific post-processing apparatus to wait for the input of post-processing settings in the post-processing apparatus.

An embodiment different from the above embodiment can also be adopted within the scope of the present invention.

The entire disclosure of Japanese Patent Application No. 2013-083752 filed on April 12, 2013 including description, claims, drawings, and abstract are incorporated herein by reference in its entirety.

## Claims

1. An image forming system (1), comprising:
an image forming apparatus (10) which forms an image on a sheet; and
a post-processing apparatus (100, 200) which performs post-processing on the sheet on which the image is formed by the image forming apparatus (10),
wherein
the image forming apparatus (10) executes a job reservation function that is storing a new job so as to output the new job after outputting a predetermined job in a case where the new job is input during output of the predetermined job, and
the image forming apparatus (10) includes:
a determination section (20) which, when the stored new job is to be output, determines whether the new job includes post-processing to be performed by a specific predetermined post-processing apparatus; and
a control section (20) which restricts output of the new job in a case where the determination section (20) determines that the new job includes the post-processing to be performed by the specific post-processing apparatus.

2. The image forming system (1) according to claim 1, further comprising a storage section (24) in which data regarding the specific predetermined post-processing apparatus is stored.

3. The image forming system (1) according to claim 1 or 2, further comprising an input section (13) at which data regarding the specific predetermined post-processing apparatus is input.

4. The image forming system (1) according to any one of claims 1 to 3, wherein the specific post-processing apparatus communicates with the image forming apparatus (10) only by parallel communication.

5. The image forming system (1) according to any one of claims 1 to 4, wherein
in the case where the determination section (20) determines that the new job includes the post-processing to be performed by the specific post-processing apparatus, the control section (20) compares information regarding the new job with information regarding the predetermined job, and
when a specific predetermined condition of the new job matches that of the predetermined job, the control section (20) releases restriction on the output of the new job.

6. The image forming system (1) according to claim 5, wherein the specific condition is set by a type of the post-processing apparatus.

7. The image forming system (1) according to any one of claims 1 to 6, wherein, in the case where the determination section (20) determines that the new job includes the post-processing to be performed by the specific post-processing apparatus, when trial output is set in the new job, the control section (20) releases restriction on the output of the new job.

8. The image forming system (1) according to claim 7, wherein, when the trial output is set in the new job, the control section (20) performs control so as to change an output condition of the new job and output the new job.

9. An image forming apparatus (10) which is connectable to a post-processing apparatus (100, 200) that performs post-processing on a sheet on which an image is formed, comprising:
a determination section (20) which, when a stored new job is to be output, determines whether the new job includes post-processing to be performed by a specific predetermined post-processing apparatus; and
a control section (20) which restricts output of the new job in a case where the determination section (20) determines that the new job includes the post-processing to be performed by the specific post-processing apparatus,
wherein
the image forming apparatus (10) executes a job reservation function that is storing the new job so as to output the new job after outputting a predetermined job in a case where the new job is input during output of the predetermined job.

10. The image forming apparatus (10) according to claim 9, further comprising a storage section (24) in which data regarding the specific predetermined post-processing apparatus is stored.

11. The image forming apparatus (10) according to claim 9 or 10, further comprising an input section (13) at which data regarding the specific predetermined post-processing apparatus is input.

12. The image forming apparatus (10) according to any one of claims 9 to 11, wherein the specific post-processing apparatus communicates with the image forming apparatus (10) only by parallel communication.

13. The image forming apparatus (10) according to any one of claims 9 to 12, wherein
in the case where the determination section (20) determines that the new job includes the post-processing to be performed by the specific post-processing apparatus, the control section (20) compares information regarding the new job with information regarding the predetermined job, and
when a specific predetermined condition of the new job matches that of the predetermined job, the control section (20) releases restriction on the output of the new job.

14. The image forming apparatus (10) according to claim 13, wherein the specific condition is set by a type of the post-processing apparatus.

15. The image forming apparatus (10) according to any one of claims 9 to 14, wherein, in the case where the determination section (20) determines that the new job includes the post-processing to be performed by the specific post-processing apparatus, when trial output is set in the new job, the control section (20) releases restriction on the output of the new job.

16. The image forming apparatus (10) according to claim 15, wherein, when the trial output is set in the new job, the control section (20) performs control so as to change an output condition of the new job and output the new job.

17. A method for controlling an image forming apparatus (10) which is connectable to a post-processing apparatus (100, 200) that performs post-processing on a sheet on which an image is formed, comprising:
determining, when a stored new job is to be output, whether the new job includes post-processing to be performed by a specific predetermined post-processing apparatus; and
controlling so as to restrict output of the new job in a case where the new job is determined to include the post-processing to be performed by the specific post-processing apparatus in the determining,
wherein
the image forming apparatus (10) executes a job reservation function that is storing the new job so as to output the new job after outputting a predetermined job in a case where the new job is input during output of the predetermined job.

18. The method for controlling the image forming apparatus (10) according to claim 17,
wherein in the case where the new job is determined to include the post-processing to be performed by the specific post-processing apparatus in the determining, information regarding the new job is compared with information regarding the predetermined job, and
when a specific predetermined condition of the new job matches that of the predetermined job, restriction on the output of the new job is released in the controlling.

19. The method for controlling the image forming apparatus (10) according to claim 18, wherein the specific condition is set by a type of the post-processing apparatus.

20. The method for controlling the image forming apparatus (10) according to any one of claims 17 to 19, wherein, in the case where the new job is determined to include the post-processing to be performed by the specific post-processing apparatus in the determining, when trial output is set in the new job, restriction on the output of the new job is released in the controlling.

21. The method for controlling the image forming apparatus (10) according to claim 20, wherein, when the trial output is set in the new job, control is performed so as to change an output condition of the new job and output the new job in the controlling.
